# EUROPEAN PATENT SPECIFICATION

(11) **EP 4 630 294 B1**
(45) Date of publication and mention of the grant of the patent: **10.06.2026**
(21) Application number: 23805031.4
(22) Date of filing: 10.11.2023
(51) Int. Cl.: B60R 13/01, B60R 5/04

(54) **VEHICLE WITH BUFFER FOR TRUNK LOAD FLOOR**
FAHRZEUG MIT PUFFER FÜR KOFFERRAUMLADEBODEN
VÉHICULE AVEC PARE-CHOCS POUR PLANCHER DE CHARGEMENT DE COFFRE

(30) Priority: 09.12.2022 CN 202211585306
(43) Date of publication of application: 15.10.2025
(73) Proprietor: Stellantis Auto SAS, 78300 Poissy (FR)
(72) Inventor: LI, Tongqing, Shanghai, 200120 (CN); MA, Junxue, Shanghai, 200233 (CN); DONNADIEU, Frederic, 25420 BART (FR); BATALLA, Fabienne, 25260 ETOUVANS (FR); ZHANG, Jianxin Kevin, Shanghai, 201111 (CN)
(74) Representative: BCIP
(86) International application number: PCT/EP2023/081494
(87) International publication number: WO 2024/120746

(56) References cited:
- DE-A1- 102016 002 885
- ES-A1- 2 770 201
- US-A1- 2013 009 419

## Description

### RELATED FIELD

The present disclosure generally relates to the field of vehicle parts and components, and more particularly, to a vehicle with a buffer for a trunk load floor.

### BACKGROUND

Normally, a supporting bracket for lapping a trunk load floor (e.g., a cover plate for covering components, such as a spare tire, arranged in the bottom of the trunk) is provided on an inner side of a trunk side trim, with a front end and a rear end of the trunk load floor abutting against a front end of the supporting bracket and an inner side of the trunk sill of the vehicle, respectively. If a distance between the front end of the supporting bracket and the trunk sill equals a dimension of the trunk load floor in a longitudinal direction of the vehicle, i.e., there is no gap between the trunk load floor and the trunk sill, the trunk load floor will be difficult to be removed; whereas if the gap between the trunk load floor and the trunk sill is too large, it can easily lead to shaking of the trunk load floor during travelling of the vehicle. For this reason, a buffer is provided between a front corner of the trunk load floor and the front end of the supporting bracket to facilitate fixation and removal of the trunk load floor.

A buffer in the prior art is typically an assembly comprising a spring and a rigid plastic housing. On the one hand, this type of assembly has quite a number of components, making it costly and complex to be mounted; and on the other hand, the rigid housing in the assembly is prone to be ruptured during opening and closing of the trunk load floor or during bumping of the vehicle. The following documents are known from prior art: ES2770201, US2013009419 and DE102016002885, ES2770201 corresponding to the preamble of claim 1.

### SUMMARY

The present disclosure aims at providing a vehicle with a buffer for a trunk load floor to overcome at least one defect of the above-described prior art. In other words, the buffer for the trunk load floor of the vehicle according to the present disclosure is simple in structure, easy to be mounted, and is conducive to reduce risk of rupture during use.

To this end, the present disclosure provides a vehicle, which comprises: a trunk sill provided with a first horizontal supporting surface; a trunk side trim fixedly connected with the trunk sill; a supporting bracket mounted to an inner side of the trunk side trim and provided with a second horizontal supporting surface flush with the first horizontal supporting surface; a trunk load floor, a rear portion of which is supported on the first horizontal supporting surface, and a side portion of which is supported on the second horizontal supporting surface; and a buffer mounted to the supporting bracket in front of the second horizontal supporting surface. The side portion of the trunk load floor is clamped between the buffer and the trunk sill in a longitudinal direction of the vehicle, and the buffer is a one-piece member made of a flexible material.

According to an optional embodiment of the present disclosure, the trunk sill comprises a limiting groove recessed backwards from a front side of the trunk sill, a bottom surface of the limiting groove forming the first horizontal supporting surface.

According to an main embodiment of the present disclosure, the supporting bracket comprises: a supporting portion, a top portion of which forms the second horizontal supporting surface; and a mounting portion positioned in front of the supporting portion and comprising a mounting hole extending along a transverse-vertical plane of the vehicle.

According to an optional embodiment of the present disclosure, the supporting portion further comprises a placement groove extending forwards and downwards from the second horizontal supporting surface to support a front portion of the trunk load floor when the trunk load floor is elevated.

According to main embodiment of the present disclosure, the buffer is mounted to the mounting portion through the mounting hole, and comprises a buffering portion extending backwards from the mounting hole and a connecting portion extending forwards from the mounting hole.

According to an optional embodiment of the present disclosure, the buffering portion has an arcuate surface oriented backwards to abut against the trunk load floor.

According to an optional embodiment of the present disclosure, the buffering portion has an 'I'-shaped cross section along a longitudinal-transverse plane of the vehicle.

According to an optional embodiment of the present disclosure, the connecting portion has an elongated shape, and is provided with a gripping portion adjacent to its front end and having a rough surface.

According to an optional embodiment of the present disclosure, the connecting portion further comprises a limiting projection abutting against the mounting portion along an edge of the mounting hole.

According to an optional embodiment of the present disclosure, the buffer is made of ethylene propylene diene terpolymer rubber.

Compared with the prior art, the vehicle with the buffer for the trunk load floor according to the present disclosure has various beneficial effects. In particular, on the one hand, this type of buffer is an elastic one-piece member, which is easy to be mounted and has low cost, and is not prone to be ruptured; and on the other hand, the buffer can ensure a relatively large compression level and elasticity, allowing the trunk load floor to be flexibly mounted and removed.

### BRIEF DESCRIPTION OF THE DRAWINGS

Other features and advantages of the present disclosure will be readily understood through the following preferred embodiments described in detail with reference to the accompanying drawings, in which a same reference numeral indicates a same or similar component.
Fig. 1 is a perspective view of an embodiment of a rear structure of a vehicle according to the present disclosure;
Fig. 2 is a partial enlarged view of the area A in Fig. 1;
Fig. 3 is a partial enlarged view of the rear structure of the vehicle in Fig. 1, with a trunk load floor being omitted;
Fig. 4 is a partial enlarged view showing a front portion of the trunk load floor in the rear structure of the vehicle in Fig. 1 placed in a placement groove;
Fig. 5 is a cross-sectional view taken along the plane B-B in Fig. 1;
Fig. 6 is a schematic view showing assembly of a buffer and a supporting bracket in the rear structure of the vehicle in Fig. 1;
Fig. 7 is an exploded schematic view of the buffer and the supporting bracket in the rear structure of the vehicle in Fig. 1; and
Fig. 8 is a schematic view showing, along a cross-section XY, assembly of the buffer and the supporting bracket in the rear structure of the vehicle in Fig. 1.

### DETAILED DESCRIPTION

The implementation and use of the embodiments are discussed in detail below. However, it should be appreciated that the specific embodiments discussed herein are merely intended to illustrate specific ways of implementing and using the present disclosure, and are not intended to limit the protection scope of the present disclosure.

In this specification, when describing structures and positions of components, directional expressions such as "up", "down", "left", "right", etc., are not absolute but relative. When the components are arranged as shown in the accompanying drawings, these directional expressions are appropriate, but when the positions of the components in the drawings change, these directional expressions should be changed accordingly.

In this specification and in the accompanying drawings, "front" and "rear" are defined by reference to the forward and backward directions of the vehicle in an X direction. The X direction represents a longitudinal direction of the vehicle (i.e., the forward and backward directions); a Y direction represents a transverse direction of the vehicle (i.e., the rightward and leftward directions); and a Z direction represents a vertical direction of the vehicle (i.e., the upward and downward directions).

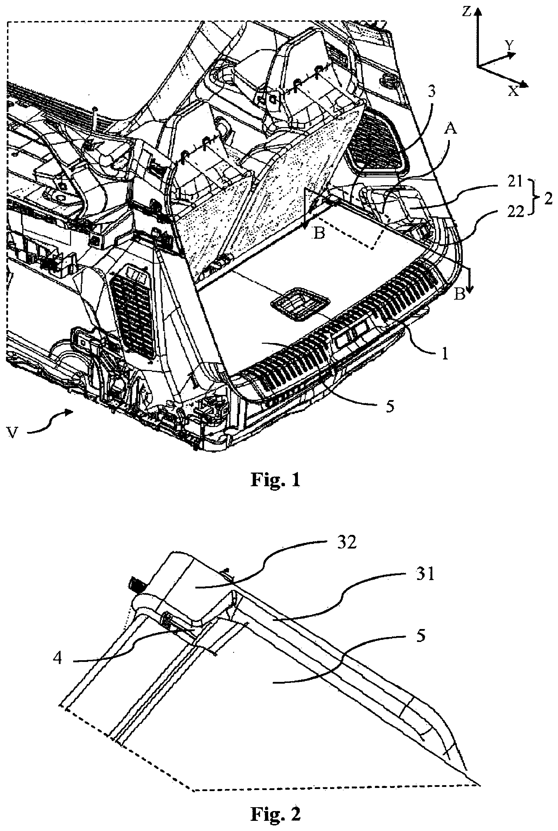

A preferred embodiment of a vehicle with a buffer for a trunk load floor according to the present disclosure is described below with reference to the accompanying drawings. As shown in Figs. 1 and 2, the vehicle V has a rear structure which comprises a trunk sill 1 (also known as tailgate sill), a trunk side trim 2, a supporting bracket 3, a buffer 4, and a trunk load floor 5.

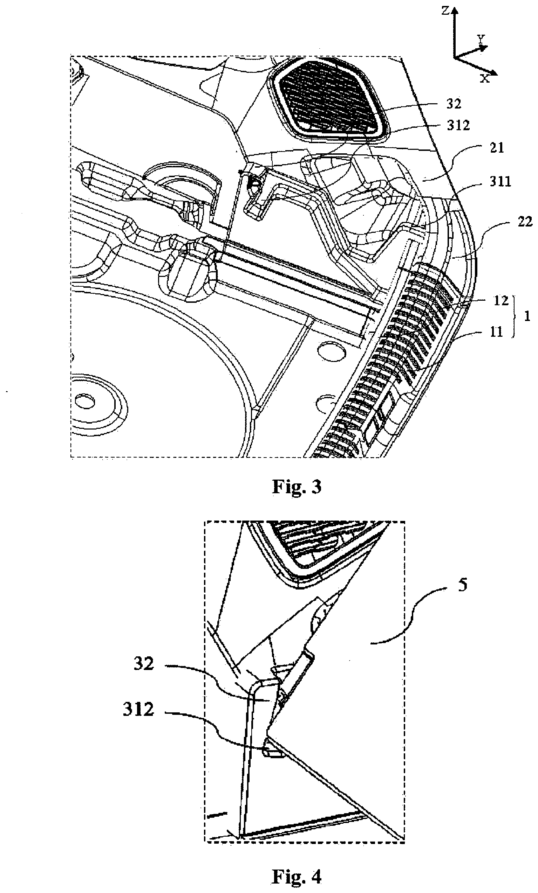

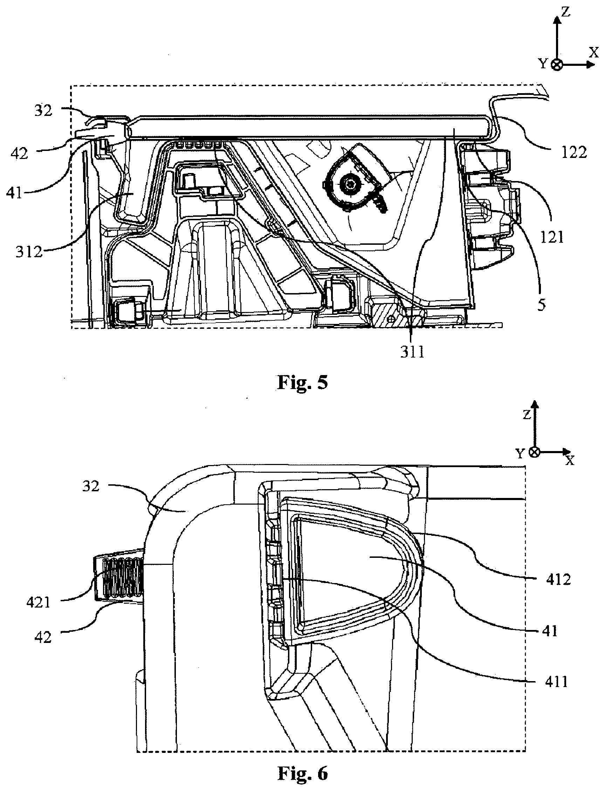

As shown in Figs. 3 and 5, the trunk sill 1 comprises a trunk sill body 11 that extends horizontally in the substantially Y direction, and a limiting groove 12 that is recessed backwards from a front side of the trunk sill body 11. The limiting groove 12 comprises a first horizontal supporting surface 121 and a limiting surface 122. The limiting surface 122 extends upwards and slightly obliquely forwards from a rear edge of the first horizontal supporting surface 121. It is thus possible to restrict the trunk load floor 5 from moving in the X direction and the Z direction by means of the limiting groove 12.

As shown in Fig. 1, the trunk side trim 2 comprises a side trim body 21 that extends substantially along a XZ plane, and a rear portion 22 that extends inwards in the Y direction from a rear edge of the side trim body 21. The rear portion 22 is mounted to a Y-directional end of the trunk sill body 11.

As shown in Figs. 1 to 3 and Fig. 5, the supporting bracket 3 is mounted on an inner side of the trunk side trim 2. The supporting bracket 3 comprises a supporting portion 31 and a mounting portion 32 positioned in front of the supporting portion 31.

The supporting portion 31 comprises, at its top portion, a second horizontal supporting surface 311 that is substantially flush with the first horizontal supporting surface 121. In this way, it is possible to place the trunk load floor 5 horizontally in the trunk at a rear portion of the vehicle by means of the first horizontal supporting surface 121 and the second horizontal supporting surface 311. Specifically, a rear portion of the trunk load floor 5 is supported on the first horizontal supporting surface 121, and a side portion of the trunk load floor 5 is supported on the second horizontal supporting surface 311. It can be appreciated that the trunk load floor 5 is clamped, in the transverse direction, between the trunk side trims 2 arranged on left and right sides, which restricts the trunk load floor 5 from moving in the Y direction.

As shown in Fig. 4, the supporting portion 31 further comprises a placement groove 312 that extends forwards and obliquely downwards from the second horizontal supporting surface 311. Thus, when the trunk load floor 5 is elevated, it is possible to support the front portion of the trunk load floor 5 by guiding the front portion of the trunk load floor 5 into the placement groove 312, without the need of manually holding the front portion of the trunk load floor 5 to keep it fixed, which is convenient and labor-saving.

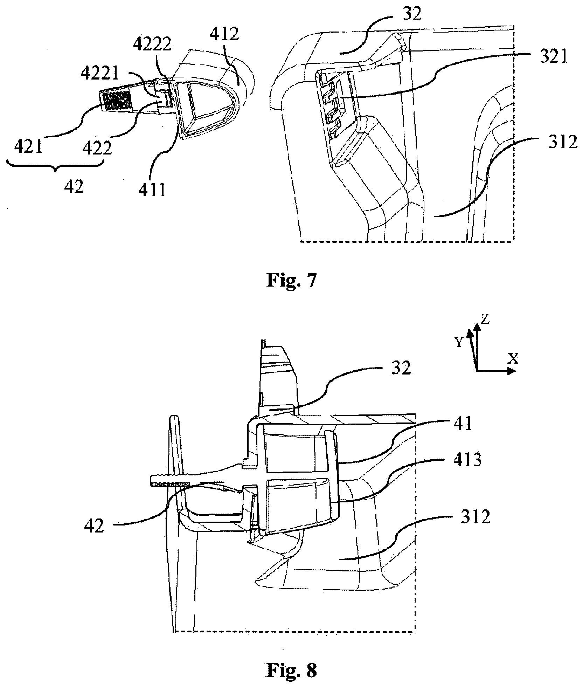

As shown in Figs. 7 and 8, the mounting portion 32 is provided with a mounting hole 321 for mounting the buffer 4. The mounting hole 321 extends along a transverse-vertical plane of the vehicle V. The mounting hole 321 matches a cross-section of the buffer 4 along a YZ plane in dimensions and shape. For example, the mounting hole 321 is a rectangle, and a cross-section of a corresponding part of the buffer 4 along the YZ plane is also a rectangle of a same size. In this way, the buffer 4 can pass through the mounting hole 321 and be fixed to the mounting portion 32.

The buffer 4 is a one-piece member made of a flexible material. For example, the buffer 4 is made of a rubber, such as ethylene propylene diene terpolymer (EPDM). This can effectively prolong the service life of the buffer 4 and meanwhile reduce its manufacturing cost.

When the trunk load floor 5 is in a closed state, the elastic buffer 4 exerts a backward thrust force in the X direction on the trunk load floor 5 to fix the trunk load floor 5 between the buffer 4 and the limiting surface 122 of the limiting groove 12. When the trunk load floor 5 needs to be opened, the trunk load floor 5 is firstly pushed horizontally forwards in the X direction, so that the elastic buffer 4 is compressed and meanwhile a gap in the X-direction is created between the rear end of the trunk load floor 5 and the limiting surface 122 of the limiting groove 12, by way of which the rear end of the trunk load floor 5 can be elevated upwards along the limiting surface 122. It is thus the case that, in the closed state, the side portion of the trunk load floor 5 is clamped in the longitudinal direction between the buffer 4 and the trunk sill 1, so that the trunk load floor 5 can be restricted from moving in the X direction, and the buffer 4 allows flexible fixation and removal of the trunk load floor 5, which is simple to operate and does not easily cause damage.

As shown in Figs. 5 and 6, more specifically, the buffer 4 comprises a buffering portion 41 and a connecting portion 42. The buffering portion 41 and the connecting portion 42 are formed in one piece.

The buffering portion 41 is, for example, an arcuate structure that extends backwards in the X direction from the mounting hole 321. The arcuate structure comprises a plane 411 extending in the YZ direction, and an arcuate surface 412 extending backwards from the plane 411. The arcuate surface 412 protrudes backwards in the X direction to abut against the front end of the trunk load floor 5. According to other variants, the buffering portion 41 may also have a cross-section along the XZ plane in other shapes, such as a trapezoid, a rectangle, or a combination that comprises straight and curved edges.

As shown in Fig. 8, the buffering portion 41 has a cross-section 413 along the XY plane in substantially a shape of 'I' (i.e., in substantially the shape of a 90-degree turned 'H'). This can effectively improve the strength of the buffer 4 and reduce its stiffness, and can ensure a relatively large compression space and elasticity. For example, when the buffering portion 41 has a compression level of 8 mm in the X direction, the buffering portion 41 can withstand a maximum thrust force of up to 45 N; and when the buffering portion 41 has a compression level of 16 mm in the X direction, the buffering portion 41 can withstand a maximum thrust force of up to 160 N.

The connecting portion 42 is in an elongated shape extending forwards in the X direction from the mounting hole 321, and the connecting portion 42 has, along the YZ plane, a cross-section that gradually tapers forward in the X direction, so that the buffer 4 can be passed forwards through the mounting hole 321. The connecting portion 42 is further provided with a gripping portion 421 adjacent to its front end. The gripping portion 421 has a rough surface to achieve an increased frictional force.

The connecting portion 42 is further provided, on both sides thereof, with respective limiting projections 422. The limiting projections 422 abut against the mounting portion 32 along an edge of the mounting hole 321. Specifically, the limiting protrusions 422 are each provided with a guiding surface 4221 and an abutting surface 4222. The guiding surface 4221 is inclined at an angle of 5-15 degrees to the XZ plane. By grasping the gripping portion 421 and pulling the connecting portion 42 forwards, the buffer 4 can pass through the mounting hole 321 along the guiding surface 4221, until the abutting surface 4222 abuts against a wall surface around a front side of the mounting hole 321. At the same time, the plane 411 of the buffering portion 41 abuts against a wall surface around a rear side of the mounting hole 321. In this way, the buffer 4 is fixed on the mounting portion 32.

The technical contents and features of the present disclosure have been disclosed above. However, it should be appreciated that those skilled in the art can make various changes and improvements to the above-disclosed conception under the creative concept of the present disclosure, and all these various changes and improvements fall within the protection scope of the present disclosure as defined by the appended claims.

The description of the above embodiments is exemplary rather than limitative, and the protection scope of the present disclosure is defined by the appended claims.

## Claims

1. A vehicle comprising:
a trunk sill (1) provided with a first horizontal supporting surface (121);
a trunk side trim (2) fixedly connected with the trunk sill (1);
a supporting bracket (3) mounted to an inner side of the trunk side trim (2) and provided with a second horizontal supporting surface (311) flush with the first horizontal supporting surface (121);
a trunk load floor (5), a rear portion of which is supported on the first horizontal supporting surface (121), and a side portion of which is supported on the second horizontal supporting surface (311); and
a buffer (4) mounted to the supporting bracket (3) in front of the second horizontal supporting surface (311),
wherein the side portion of the trunk load floor (5) is clamped between the buffer (4) and the trunk sill (1) in a longitudinal direction of the vehicle (V),
wherein the buffer (4) is a one-piece member made of a flexible material
wherein the supporting bracket (3) comprises:
a supporting portion (31), a top portion of which forms the second horizontal supporting surface (311); and
a mounting portion (32) positioned in front of the supporting portion (31) and comprising a mounting hole (321) extending along a transverse-vertical plane of the vehicle (V) **characterized in that** the buffer (4) is mounted to the mounting portion (32) through the mounting hole (321), and comprises a buffering portion (41) extending backwards from the mounting hole (321) and a connecting portion (42) extending forwards from the mounting hole (321).

2. The vehicle according to claim 1, wherein the trunk sill (1) comprises a limiting groove (12) recessed backwards from a front side of the trunk sill (1), wherein a bottom surface of the limiting groove (12) forms the first horizontal supporting surface (121).

3. The vehicle according to claim 1, wherein the supporting portion (31) further comprises a placement groove (312) extending forwards and downwards from the second horizontal supporting surface (311) to support a front portion of the trunk load floor (5) when the trunk load floor (5) is elevated.

4. The vehicle according to claim 1, wherein the buffering portion (41) has an arcuate surface (412) oriented backwards to abut against the trunk load floor (5).

5. The vehicle according to claim 1, wherein the buffering portion (41) has an 'I'-shaped cross section (413) along a longitudinal-transverse plane of the vehicle (V).

6. The vehicle according to claim 1, wherein the connecting portion (42) has an elongated shape, and is provided with a gripping portion (421) adjacent to its front end and having a rough surface.

7. The vehicle according to claim 1, wherein the connecting portion (42) further comprises a limiting projection (422) abutting against the mounting portion (32) along an edge of the mounting hole (321).

8. The vehicle according to any one of claims 1 to 7, wherein the buffer (4) is made of ethylene propylene diene terpolymer rubber.

## Patentansprüche

1. Ein Fahrzeug, umfassend: eine Ladekante (1) mit einer ersten horizontalen Auflagefläche (121); eine mit der Ladekante (1) fest verbundene Ladekantenverkleidung (2); eine an der Innenseite der Ladekantenverkleidung (2) angebrachte Halterung (3) mit einer zweiten horizontalen Auflagefläche (311), die bündig mit der ersten horizontalen Auflagefläche (121) abschließt; einen Ladeboden (5), dessen hinterer Abschnitt auf der ersten horizontalen Auflagefläche (121) und dessen seitlicher Abschnitt auf der zweiten horizontalen Auflagefläche (311) aufliegt; und ein Puffer (4), der an der Halterung (3) vor der zweiten horizontalen Auflagefläche (311) befestigt ist, wobei der seitliche Abschnitt des Ladebodens (5) zwischen dem Puffer (4) und der Ladekante (1) in Längsrichtung des Fahrzeugs (V) eingeklemmt ist, wobei der Puffer (4) ein einteiliges Element aus flexiblem Material ist, wobei die Halterung (3) Folgendes umfasst: einen Auflagerabschnitt (31), dessen Oberseite die zweite horizontale Auflagefläche (311) bildet; und einen Montageabschnitt (32), der vor dem Auflagerabschnitt (31) angeordnet ist und eine Montagebohrung (321) aufweist, die sich in einer quervertikalen Ebene des Fahrzeugs (V) erstreckt, wodurch der Puffer (4) durch die Montagebohrung (321) an dem Montageabschnitt (32) befestigt ist und einen von der Montagebohrung (321) nach hinten ragenden Pufferabschnitt (41) und einen von der Montagebohrung (321) nach vorn ragenden Verbindungsabschnitt (42) aufweist.

2. Fahrzeug nach Anspruch 1, wobei die Ladekante (1) eine von ihrer Vorderseite nach hinten vertiefte Begrenzungsnut (12) aufweist, deren Unterseite die erste horizontale Auflagefläche (121) bildet.

3. Fahrzeug nach Anspruch 2, wobei der Auflagebereich (31) ferner eine Führungsnut (312) aufweist, die sich von der zweiten horizontalen Auflagefläche (311) nach vorn und unten erstreckt und einen vorderen Abschnitt des Ladebodens (5) stützt, wenn dieser angehoben ist.

4. Fahrzeug nach Anspruch 1, wobei der Pufferbereich (41) eine nach hinten gerichtete, bogenförmige Fläche (412) aufweist, die am Ladeboden (5) anliegt.

5. Fahrzeug nach Anspruch 1, wobei der Pufferbereich (41) einen I-förmigen Querschnitt (413) in Längs-Quer-Ebene des Fahrzeugs (V) aufweist.

6. Fahrzeug nach Anspruch 1, wobei der Verbindungsabschnitt (42) länglich geformt ist und an seinem vorderen Ende einen Greifabschnitt (421) mit rauer Oberfläche aufweist.

7. Fahrzeug nach Anspruch 1, wobei der Verbindungsabschnitt (42) ferner einen Begrenzungsvorsprung (422) umfasst, der entlang einer Kante der Befestigungsbohrung (321) an den Montageabschnitt (32) anliegt.

8. Fahrzeug nach einem der Ansprüche 1 bis 7, wobei der Puffer (4) aus Ethylen-Propylen-Dien-Terpolymer-Kautschuk besteht.

## Revendications

1. Véhicule comprenant : un seuil de coffre (1) muni d'une première surface d'appui horizontale (121) ; une garniture latérale de coffre (2) fixée au seuil de coffre (1) ; un support (3) fixé à la face intérieure de la garniture latérale de coffre (2) et muni d'une seconde surface d'appui horizontale (311) affleurante à la première surface d'appui horizontale (121) ; un plancher de coffre (5) dont la partie arrière repose sur la première surface d'appui horizontale (121) et la partie latérale sur la seconde surface d'appui horizontale (311). et un tampon (4) monté sur le support (3) devant la seconde surface d'appui horizontale (311), la partie latérale du plancher de chargement du coffre (5) étant fixée entre le tampon (4) et le seuil du coffre (1) dans le sens longitudinal du véhicule (V), le tampon (4) étant une pièce unique en matériau flexible le support (3) comprenant : une partie d'appui (31), dont la partie supérieure forme la seconde surface d'appui horizontale (311) ; et une partie de fixation (32) positionnée devant la partie d'appui (31) et comportant un trou de fixation (321) s'étendant dans un plan transversal-vertical du véhicule (V), le tampon (4) étant fixé à la partie de fixation (32) par l'intermédiaire du trou de fixation (321). Le tampon comprend une partie d'amortissement (41) s'étendant vers l'arrière à partir du trou de fixation (321) et une partie de liaison (42) s'étendant vers l'avant à partir du trou de fixation (321).

2. Véhicule selon la revendication 1, dans lequel le seuil de coffre (1) comprend une rainure de retenue (12) en retrait par rapport à sa face avant, la surface inférieure de cette rainure (12) constituant la première surface d'appui horizontale (121).

3. Véhicule selon la revendication 2, dans lequel la partie d'appui (31) comprend en outre une rainure de positionnement (312) s'étendant vers l'avant et vers le bas depuis la seconde surface d'appui horizontale (311) afin de supporter la partie avant du plancher de coffre (5) lorsque celui-ci est relevé.

4. Véhicule selon la revendication 1, dans lequel la partie amortisseur (41) présente une surface arquée (412) orientée vers l'arrière et venant s'appuyer contre le plancher de coffre (5).

5. Véhicule selon la revendication 1, dans lequel la partie amortisseur (41) présente une section transversale en forme de « I » (413) dans le plan longitudinal-transversal du véhicule (V).

6. Véhicule selon la revendication 1, dans lequel la partie de liaison (42) présente une forme allongée et est munie d'une partie de préhension (421) adjacente à son extrémité avant et présentant une surface rugueuse.

7. Véhicule selon la revendication 1, dans lequel la partie de liaison (42) comprend en outre une saillie de limitation (422) venant buter contre la partie de montage (32) le long d'un bord du trou de montage (321).

8. Véhicule selon l'une quelconque des revendications 1 à 7, dans lequel le tampon (4) est en caoutchouc terpolymère d'éthylène-propylène-diène.
